# FASCICULE DE BREVET EUROPEEN

(11) **EP 3 374 073 B1**
(45) Date de publication et mention de la délivrance du brevet: **14.08.2019**
(21) Numéro de dépôt: 16785410.8
(22) Date de dépôt: 14.10.2016
(51) Int. Cl.: B01J 8/04, B01J 8/02

(54) **DISPOSITIF DE FILTRATION ET DE DISTRIBUTION POUR REACTEUR CATALYTIQUE**
FILTERUNGS- UND VERTEILUNGSVORRICHTUNG FÜR EINEN KATALYTISCHEN REAKTOR
FILTERING AND DISTRIBUTION DEVICE FOR A CATALYTIC REACTOR

(30) Priorité: 09.11.2015 FR 1560714; 18.05.2016 FR 1654396
(43) Date de publication de la demande: 19.09.2018
(73) Titulaire: IFP Energies nouvelles, 92852 Rueil-Malmaison (FR)
(72) Inventeur: PLAIS, Cecile, 69420 Les Haies (FR); BAZER-BACHI, Frederic, 30340 Saint Privat des Vieux (FR); HAROUN, Yacine, 69520 Grigny (FR); DELTEIL, Jauffray Salvatore, 95570 Moisselles (FR); WEISS, Wilfried, 38540 Valencin (FR); AIDDOUCH, Younes, 60300 Senlis (FR); BONNARDOT, Jérôme, 78330 Fontenay le Fleury (FR)
(74) Mandataire: IFP Energies nouvelles
(86) Numéro de dépôt international: PCT/EP2016/074820
(87) Numéro de publication internationale: WO 2017/080756

(56) Documents cités:
- WO-A2-2006/097590
- FR-A1- 2 889 973
- FR-A1- 2 959 677
- FR-A1- 2 996 465
- FR-A1- 3 006 599

## Description

La présente invention concerne le domaine des plateaux distributeurs destinés à alimenter en gaz et en liquide des réacteurs chimiques fonctionnant à co-courant descendant de gaz et de liquide.

On rencontre de tels réacteurs dans le domaine du raffinage, en particulier dans les hydrotraitements qui nécessitent des flux d'hydrogène sous pression élevée et travaillant avec des charges liquides lourdes pouvant contenir des impuretés constituées de particules solides colmatantes.

Dans certains cas en effet, la charge liquide, voire le mélange de la charge liquide et d'un gaz riche en hydrogène dans des conditions de température et de pression nécessaires à l'hydrotraitement, contient des impuretés qui peuvent se déposer sur le lit catalytique lui-même et, au fil du temps, réduire le volume interstitiel de ce lit catalytique et ainsi conduire à une augmentation progressive de la perte de charge. Dans des cas extrêmes, notamment en fin de cycle, on observe un bouchage du lit catalytique qui se traduit par une montée de la perte de charge très rapide, perturbant ainsi l'écoulement au travers du réacteur.

La perte de charge peut devenir telle que l'exploitant soit obligé d'arrêter le réacteur et de remplacer une partie ou la totalité du catalyseur, ce qui entraîne bien sûr une réduction considérable des durées de cycles du procédé.

Parmi ces charges colmatantes, on peut citer les mélanges d'hydrocarbures pouvant contenir une proportion non négligeable de composés insaturés ou polyinsaturés acétyléniques ou diéniques, ou une combinaison de ces différents composés, la proportion totale de composés insaturés pouvant aller jusqu'à 90% poids dans la charge. On peut citer à titre d'exemple représentatif des charges concernées par la présente invention l'essence de pyrolyse, la pyrolyse désignant un procédé de craquage thermique bien connu de l'homme du métier. On peut également citer les coupes lourdes d'hydrocarbures, notamment les gazoles, les gazoles sous vide, les résidus atmosphériques ou les résidus sous vide. Ces coupes lourdes peuvent être issues de distillation directe de pétrole brut ou issues de procédé de conversion tels la viscoréduction, la cokéfaction, le déasphaltage, le craquage catalytique ou l'hydrocraquage.

Le bouchage d'une partie du lit catalytique peut être dû à plusieurs mécanismes.

Directement, la présence de particules dans le flux de la charge peut entraîner un bouchage par dépôt des dites particules au sein du lit catalytique, ce dépôt ayant pour effet de réduire la fraction de vide.

Indirectement, la formation d'une couche de produits issus des réactions chimiques, typiquement le coke, mais éventuellement d'autres produits solides dérivés des impuretés présentes dans la charge, produits qui se déposent à la surface des grains de catalyseur, peut également contribuer à la réduction de la fraction vide du lit.

Les coupes lourdes d'hydrocarbures cités précédemment peuvent également contenir diverses impuretés, notamment des dérivés de fer ou de calcium qui peuvent contribuer au colmatage des lits catalytiques. Les coupes de type résidus contiennent également des asphaltènes qui sont des composés chimiques souvent décrits comme précurseurs de coke. De plus le dépôt des particules colmatantes pouvant se faire au sein du lit de manière plus ou moins aléatoire, il peut en résulter des hétérogénéités dans la répartition de la fraction vide de ce lit qui vont se traduire par la création de chemins préférentiels.

Ces chemins préférentiels sont extrêmement préjudiciables sur le plan hydrodynamique puisqu'ils perturbent plus ou moins gravement l'homogénéité de l'écoulement des phases au sein du lit et peuvent conduire à des hétérogénéités au niveau de l'avancement de la réaction chimique, ainsi que sur le plan thermique (différence de température radiale, point chaud par exemple).

### Etat de la technique

Pour prévenir le colmatage prématuré du lit catalytique, différentes solutions techniques ont été développées et qui sont fondées sur l'utilisation d'un système de filtration disposé en amont du lit catalytique (dans le sens d'écoulement des fluides).

Par exemple on peut citer:
- le document FR 2 889 973 qui divulgue un plateau de distribution qui supporte directement un media filtrant assure ainsi à la fois les fonctions de filtration vis à vis du lit catalytique placé en aval et de distribution des fluides gaz et liquide. Le plateau filtrant selon FR 2 889 973 comporte des cheminées présentant des trous perforés (ou des fentes) au milieu du lit de filtration, ce qui peut poser des difficultés dans le cas d'un bouchage du lit à proximité des trous. Ce bouchage du lit entrainerait par voie de conséquence le bouchage de la cheminée avec deux conséquences : un déséquilibre de la distribution du débit liquide sous le plateau distributeur, et un risque d'endommagement des cheminées lors du démontage du plateau avec des cheminées collées et agrégées au lit de filtration.
- le document FR2959677 qui décrit un ensemble de paniers amovibles contenant des particules de filtration, ces paniers étant déposés sur le plateau distributeur afin de faciliter le montage/démontage du dispositif de filtration sans intervenir sur le plateau distributeur. Pour assurer une intégrité mécanique du système de paniers, lesdits paniers amovibles sont maintenus solidaires par boulonnage ou par un système d'agrafe compliquant ainsi les opérations montage et démontage.
- le document FR 2 996 465 qui divulgue un ensemble de filtration et de distribution d'une phase gaz et liquide comprenant un plateau distributeur muni de cheminées de distribution et un support de filtration perforé supérieur, sur lequel est disposé un lit de média filtrant, qui est traversé par les cheminées du plateau distributeur. Le support de filtration est maintenu mécaniquement au plateau distributeur au moyen d'une pièce coudée placée entre ledit support et le plateau ou par un système de vissage. La principale difficulté de mise en oeuvre de ce système réside dans le remplissage du média filtrant qui doit se faire une fois que le support est mis en place dans le réacteur et surtout lors du démontage du système qui suppose une vidange du support au préalable depuis l'intérieur du réacteur, rendu d'autant plus difficile en cas d'agglomération (ou prise en masse) du média WO2006/097590 décrit un dispositif de filtration et de distribution pour réacteur avec des cheminées verticales.

Un but de l'invention est de fournir un nouveau dispositif de filtration et de distribution pour réacteur à écoulement co-courant descendant d'une phase gazeuse et d'une phase liquide qui soit plus facile à installer et à démonter, permettant ainsi de réduire le temps d'immobilisation du réacteur et limiter les risques de dégradation dudit dispositif lors des opérations de démontage.

### Résumé de l'invention

A cette fin, il est proposé un dispositif de filtration et de distribution d'une phase gazeuse et d'une phase liquide, apte à être disposé en amont d'un lit catalytique fixe d'un réacteur fonctionnant à co-courant descendant de gaz et de liquide, comprenant:
- un plateau plein s'étendant selon un plan horizontal sur lequel sont fixées des cheminées sensiblement verticales ouvertes à leur extrémité supérieure et inférieure, lesdites cheminées étant munies d'ouvertures sur au moins une fraction de leur hauteur;
- une pluralité de paniers amovibles aptes à contenir et retenir au moins un média filtrant, chaque panier amovible étant défini par une paroi verticale ellipsoïdale ou par au moins trois parois latérales verticales et un fond, les parois verticales et/ou le fond étant perméables au gaz et au liquide et dans lequel chaque panier est pourvu d'au moins un moyen de support du panier coopérant avec une cheminée du plateau pour soutenir le panier amovible.

Les opérations de montage et le démontage par rapport aux dispositifs de l'art antérieur sont facilitées étant donné que dans le dispositif selon l'invention les paniers amovibles sont soutenus directement par les cheminées; il n'est donc pas nécessaire de mettre en oeuvre des moyens supplémentaire pour fixer les paniers au plateau distributeur, tels que par exemple des vis ou des agrafes.
Outre leur fonction de support pour les paniers amovibles, les cheminées du plateau distributeur peuvent assurer une fonction de guidage lors de l'installation desdits paniers.
Un autre avantage du dispositif selon l'invention tient au fait que le chargement des paniers en média filtrant peut se faire à l'extérieur du réacteur, ce qui facilite et accélère grandement l'opération, celle-ci se limitant ensuite à la mise en place des paniers chargés au-dessus du plateau distributeur. En outre le réglage de la hauteur des particules de filtration dans chaque panier peut se faire de manière très précise panier par panier.

Selon un mode de réalisation, le fond du panier est traversé par au moins une cheminée et le moyen de support coopère avec la cheminée qui traverse le fond.

Selon un autre mode de réalisation, au moins une des parois latérales du panier comprend le moyen de support coopérant avec une cheminée.

De préférence le moyen de support comprend un tube fixé sur le fond du panier dont le diamètre est sensiblement supérieur à celui de la cheminée, ledit tube étant fermé à une extrémité supérieure et ouvert à une extrémité inférieure de sorte que le tube soit apte à recevoir la cheminée et ainsi reposer sur cette dernière.
Le tube peut ainsi comporter une ou plusieurs ouvertures dans une section attenante à son extrémité supérieure de manière à laisser diffuser la phase gazeuse à l'intérieur des cheminées. Dans un mode de réalisation, le tube est perméable à la phase liquide et éventuellement capable de retenir la phase solide constitué par le média filtrant. Le tube est poreux sur sa hauteur de manière à permettre également le passage dans les cheminées de la phase liquide accumulée au niveau du média filtrant. Par exemple les ouvertures sont réparties sur la hauteur du tube avec un pas régulier entre les ouvertures. Alternativement, le tube est réalisé à partir d'une grille perforée, par exemple du type Johnson.

Selon un mode de réalisation alternatif, le moyen de support comprend une pluralité de bras verticaux fixés sur le fond du panier et équipés de moyens d'accrochage configurés pour coopérer avec la cheminée.
De préférence le fond des paniers est perméable à la phase liquide et la hauteur h du moyen de support est inférieure à la hauteur H des cheminées de manière à créer un espace de collecte de la phase liquide entre le fond des paniers et le plateau. Ce mode de réalisation est avantageux car il permet de fournir une zone de collecte de liquide dans laquelle la phase liquide purifiée est mélangée avant d'être distribuée sur le lit catalytique via les cheminées. Dans ce mode de réalisation, les ouvertures des cheminées sont essentiellement situées dans la zone de collecte de liquide et les moyens de support ne sont pas nécessairement perméables au liquide.

Selon un autre mode de réalisation préféré, les paniers filtrant comportent au moins une cheminée perméable au gaz et le fond du panier étant perméable à la phase liquide. Chaque panier est posé sur au moins une cheminée du plateau plein de sorte que le fond du panier forme les moyens de support du panier coopérant avec la cheminée du plateau plein.

Selon un mode de réalisation préféré, les paniers sont délimités par une cheminée du plateau située à chaque extrémité des côtés du panier.

De préférence, les paniers situés en périphérie dudit dispositif ont au moins une paroi latérale présentant une courbure. Ce mode de réalisation permet de réaliser un dispositif qui puisse épouser la courbure de la paroi du réacteur dans lequel il est installé de manière à couvrir de manière compacte la section du réacteur.

De préférence, deux paniers adjacents sont séparés par un espace libre ou jeu fonctionnel de manière à permettre leur mise en place et leur retrait panier par panier. Par exemple cet espace libre est compris entre 1 et 20 mm, de préférence compris entre 1 et 10 mm.

La présente invention se rapporte également à un réacteur fonctionnant à co-courant descendant de gaz et de liquide comprenant :
- un lit catalytique fixe;
- un dispositif de filtration et de distribution d'une phase gazeuse et d'une phase liquide selon l'invention agencé en amont du lit catalytique;
- au moins une couche de moyens de filtration disposée dans les paniers,
étant entendu que l'extrémité supérieure d'une cheminée est située au-dessus de la couche supérieure de filtration lorsque ladite cheminée traverse le fond du panier.

Le réacteur selon l'invention est par exemple un réacteur fonctionnant en écoulement ruisselant à co-courant descendant de gaz et de liquide avec une vitesse liquide comprise entre 0,1 et 5 cm/s, par exemple comprise entre 0,1 et 1 cm/s (dans le cas des réacteurs d'hydrotraitement) ou comprise entre 1,1 et 5 cm/s (dans le cas des réacteurs d'hydrogénation sélective).
De préférence, le dispositif de filtration et de distribution est agencé dans le réacteur de sorte qu'une zone annulaire est laissée libre entre les parois des paniers périphériques attenantes à la paroi du réacteur. Par exemple la zone annulaire correspond de 2% à 50%, et préférentiellement de 5% à 20% de la section du réacteur.

Selon l'invention, les paniers peuvent contenir plusieurs couches de média filtrant.

De façon avantageuse, le dispositif de filtration et de distribution agencé dans le réacteur comprend au moins une grille de protection amovible perforée disposée au-dessus de la couche supérieure de média filtrant. Cette grille de protection permet de protéger le média filtrant de l'arrivée du flux gaz/liquide rentrant dans le réacteur et ainsi d'éviter toute projection de particules constituant la couche supérieure de média filtrant. Dans le cadre de l'invention, le dispositif peut également comporter une grille amovible par panier autorisant ainsi un retrait des paniers pleins en les orientant avec un angle par rapport à l'horizontal afin de faciliter leur passage à travers un orifice de sortie pratiqué dans le réacteur (par exemple un trou d'homme).

De préférence et pour des raisons de facilité de manutention, les paniers amovibles ont une dimension inférieure à celle d'un trou d'homme pratiqué dans le réacteur.

L'application principalement visée est le traitement catalytique de coupes pétrolières lourdes, même si la présente invention peut s'appliquer à toute hydrogénation de coupes pétrolières chargée de particules colmatantes ou d'éléments précurseurs de la formation de coke, pouvant provoquer un colmatage du lit fixe.

### Description détaillée de l'invention

Les autres caractéristiques et avantages de l'invention vont apparaître à la lecture de la description qui va suivre, donnée à titre uniquement illustratif et non limitatif, et en référence aux dessins parmi lesquels :
- la figure 1 est une vue schématique en coupe d'un réacteur fonctionnant à co-courant descendant de gaz et de liquide incluant un dispositif de filtration et de distribution disposé en amont d'un lit catalytique fixe;
- la figure 2 est une vue détaillée de profil d'un plateau distributeur d'un dispositif de filtration et de distribution selon l'invention;
- la figure 3 est une vue détaillée de profil d'un ensemble de paniers d'un dispositif de filtration et de distribution selon l'invention;
- les figures 4 à 6 sont des vues, selon un plan horizontal passant par la droite (AA') de la figure 1, d'un ensemble de paniers de filtration d'un dispositif de filtration et de distribution selon l'invention;
- la figure 7 est une vue de profil d'un dispositif de filtration et de distribution selon un autre mode de réalisation.

Généralement, les éléments semblables sont dénotés par des références identiques dans les figures.

La présente invention concerne un dispositif de filtration et de distribution destiné à l'alimentation d'un réacteur catalytique fonctionnant sur une charge gaz et liquide, plus particulièrement dans un régime d'écoulement appelé régime ruisselant, c'est à dire avec une vitesse superficielle liquide comprise entre 0,1 cm/s et 5 cm/s.

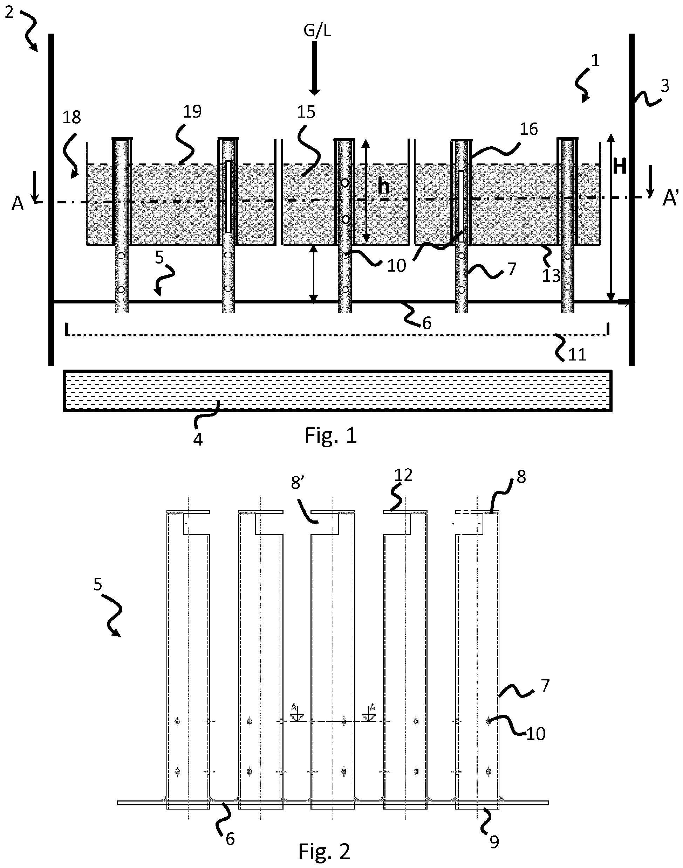

En référence à la figure 1, le dispositif de filtration et de distribution 1 d'une phase gazeuse et d'une phase liquide est disposé dans un réacteur catalytique 2, fonctionnant à co-courant descendant de gaz et de liquide, dont l'enceinte est délimitée par une paroi 3 généralement de section circulaire. Le dispositif 1 est agencé en amont d'un lit catalytique fixe 4. Le dispositif selon l'invention peut être défini comme un plateau distributeur dont la fonction est de transformer le jet diphasique entrant dans le réacteur en un mélange gaz/liquide uniformément distribué sur la surface du lit catalytique placé en aval dudit plateau et qui intègre également une fonction de filtration par la mise en place d'une couche de filtration.

En référence aux figures 1 et 2, le dispositif 1 comprend un plateau distributeur 5 qui comprend une plaque pleine 6 (appelé aussi plateau plein 6) sur laquelle sont fixés des moyens de distribution 7 d'un mélange biphasique gaz/liquide. Les moyens de distribution 7 qui traversent la plaque pleine 6 se présentent sous la forme de cheminées verticales 7 fermées à leur extrémité supérieure 8 et ouvertes à leur extrémité inférieure 9 et perforées d'orifices 10 latéraux (appelés aussi ici ouvertures) répartis sur la hauteur des cheminées 7 dont la fonction est détaillée ci-après. Il est à noter que de manière alternative, les ouvertures 10 pratiquées dans les cheminées 7 peuvent être remplacées par une ou plusieurs fentes. Chaque cheminée 7 comprend en outre une ouverture latérale 8' située sous son extrémité supérieure fermée 8 pour permettre l'introduction de la phase gazeuse. De préférence le plateau distributeur 5 est configuré de telle sorte que la plaque pleine 6 a une section qui correspond à celle de l'enceinte du réacteur. Ainsi si le réacteur est de section circulaire, la dimension de la section de la plaque pleine correspond à celle du diamètre interne du réacteur.

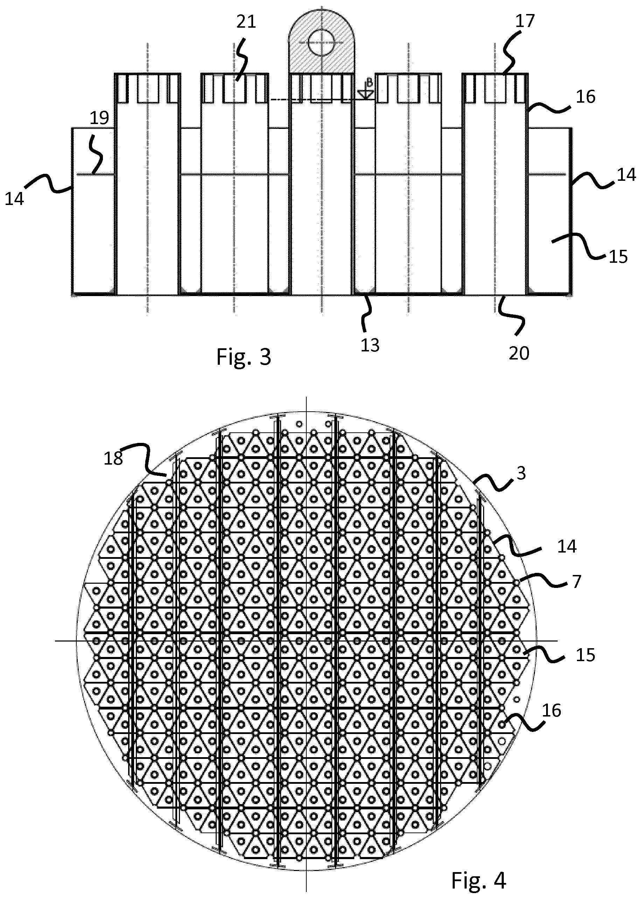

Comme indiqué sur les figures 1 et 2, l'extrémité inférieure 9 des cheminées 7 débouche au niveau ou en-dessous de la plaque pleine 6 et au-dessus du lit catalytique fixe 4. De préférence, le réacteur comprend en outre un élément dispersif 11 agencé en dessous du plateau distributeur 5 dont la fonction est de briser et disperser le jet de mélange gaz/liquide qui est expulsé de l'extrémité inférieure 9 des cheminées 7. En référence à la figure 2, on notera que l'extrémité supérieure 8 ouverte des cheminées 7 est coiffée d'un élément déflecteur 12 qui empêche l'introduction de la phase liquide par l'ouverture de l'extrémité supérieure 8 mais laisse passer la phase gazeuse dans la zone latérale de la partie supérieure.
Conformément à l'invention, le dispositif 1 intègre en outre une fonction de filtration apportée par une pluralité de paniers de filtration agencés au-dessus du plateau distributeur 5 et qui sont supportés par ce dernier.
Comme représenté sur la figure 3, les paniers de filtration sont composés d'un fond 13 qui supporte au moins trois parois latérales 14 sensiblement verticales. Les parois verticales 14 et le fond 13 sont poreux pour être perméables à la phase liquide tout en retenant le média filtrant 15. Les parois verticales 14 et le fond 13 peuvent être formés par une grille métallique, par exemple du type Johnson connu de l'homme du métier, ou une plaque métallique percée d'orifices dont la taille des mailles de la grille ou des orifices est telle que celle-ci est strictement inférieure à la dimension moyenne des éléments constituants le média filtrant 15 porté par le panier.

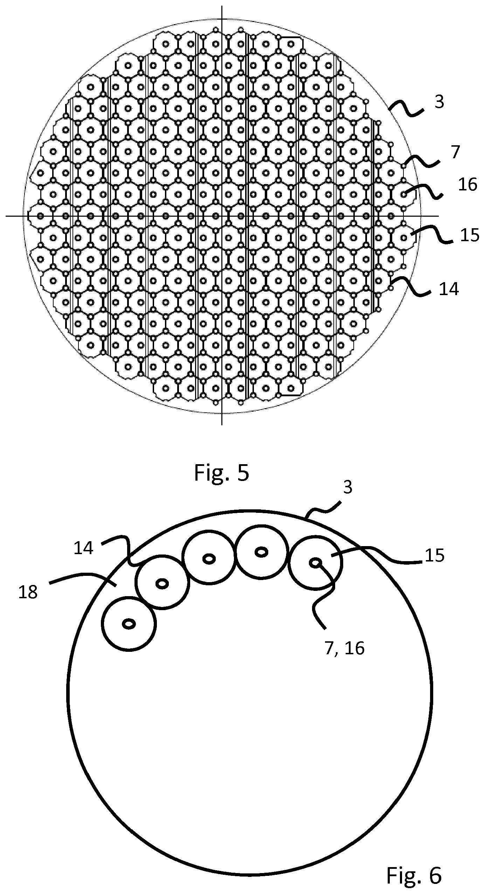

Conformément à l'invention et en référence aux figures 1 et 3, le panier comprend en outre au moins un moyen de support 16 du panier coopérant avec au moins une cheminée 7 du plateau distributeur 5. Dans l'exemple de la figure 3, le moyen de support 16 se présente sous la forme d'un tube fixé sur le fond du panier et dont le diamètre est sensiblement supérieur à celui de la cheminée 7. Le tube est fermé à son extrémité supérieure par une plaque 17 et ouvert à son extrémité inférieure 20 de sorte que le tube soit apte à recevoir la cheminée. Une fois le panier mis en place, celui repose sur la cheminée 7 par l'intermédiaire de la plaque 17. On notera par ailleurs que la section qui est attenante à l'extrémité supérieure du tube 16 comprend des ouvertures 21 qui sont en communication avec l'extrémité supérieure ouverte de la cheminée sur laquelle il est monté de manière à autoriser le passage du flux gazeux dans le tube 16 puis dans la cheminée 7 du plateau distributeur. Dans un mode de réalisation particulier, lorsque les cheminées sont munies d'orifices répartis sur leur hauteur, les tubes sont également poreux sur au moins la moitié inférieure de leur hauteur et de préférence sur toute leur hauteur pour autoriser le passage de la phase liquide épurée depuis les paniers de filtration dans les cheminées de distribution. Selon un autre mode de réalisation alternatif non représenté, le moyen de support se présente sous la forme de bras verticaux fixés au fond du panier et lesdits bras sont équipés de moyens d'accrochage configurés pour coopérer avec la cheminée, par exemple au niveau de l'ouverture supérieure de la cheminée ou sur un niveau quelconque de la hauteur de la cheminée.
La section horizontale délimitée par les parois verticales 14 peut être triangulaire (cas de trois parois verticales) comme représenté sur la figure 4, circulaire (cas particulier d'une paroi verticale de forme ellipsoïdale) comme représenté sur la figure 6, ou hexagonales (cas de six parois verticales) comme présenté sur la figure 5. La section horizontale d'un panier peut également être un quadrilatère, par exemple de forme carrée ou rectangulaire.
La figure 1 représente un mode réalisation particulier du dispositif de filtration et de distribution dans lequel le fond 13 des paniers est perméable à la phase liquide et dans lequel la hauteur h comprise entre le fond du panier et l'extrémité supérieure du moyen de support 16 est inférieure à la hauteur H des cheminées de manière à créer un espace de collecte E de la phase liquide (appelé aussi zone de mélange du liquide E) entre le fond 13 des paniers et le plateau distributeur 5. On notera que dans ce mode de réalisation les ouvertures 10 des cheminées sont situées essentiellement dans l'espace de collecte de manière à communiquer avec celui-ci et que les parois des tubes 16 de support du panier ne sont pas nécessairement perméables au liquide, par exemple les parois des tubes sont pleines.

On notera que, comme également représenté à la figure 1, les ouvertures 10 des cheminées 7 peuvent être présentes sur la majeure partie de la hauteur des cheminées 7 de sorte que lesdites ouvertures 10 soient situées dans la couche de média filtrant 15. Cela permet lorsque le moyen de support est perméable au liquide de maintenir la distribution du liquide au fur et à mesure du colmatage, puisque l'ensemble des cheminées 7 est toujours utilisé, et que le débit liquide reste approximativement identique entre les cheminées, ce dernier étant essentiellement conditionné par le niveau liquide s'établissant au sein des paniers de filtration. La distribution du liquide reste donc contrôlée tout au long de la durée de vie du lit de filtration, et l'utilisation progressive des orifices latéraux ou des fentes latérales distribués tout au long des cheminées, permet d'utiliser le lit de filtration jusqu'à sa saturation complète, sans montée du gradient de pression qui obligerait à l'arrêt du réacteur.
De préférence et comme indiqué sur la figure 1, la section développée par l'ensemble des paniers de filtration du dispositif n'occupe pas la totalité de la section du réacteur. Il existe en effet un espace annulaire 18 entre la zone de filtration les paniers dits de "périphérie" et la paroi 3 du réacteur. Cet espace annulaire 18 permet le passage du liquide dans la zone de collecte E et ensuite vers les moyens de distribution 7 même dans la situation où le média filtrant est colmaté par les différentes impuretés récupérées au cours du temps.
Dans le cas où la fonction de filtration n'est plus assurée par les paniers de filtration, le plateau de distribution continue néanmoins de fonctionner via les ouvertures 10 des éléments de cheminée 7 qui sont situés dans la zone de mélange du liquide E.
La largeur de cet espace annulaire est établie pour que le bilan pression soit respecté même dans le cas où le plateau est totalement colmaté. De préférence la zone annulaire 18 correspond à 2% à 50%, et préférentiellement à 5% à 20% de la section du réacteur Lorsque le dispositif de filtration et de distribution est mis en oeuvre dans un réacteur, les paniers de filtration sont remplis d'une ou plusieurs couches de média filtrant 15. Par exemple, la couche de média filtrant 15 peut comporter des éléments dits de protection, sur une hauteur qui est généralement comprise entre 100 mm et 450 mm, et préférentiellement comprise entre 100 et 300 mm.
Les éléments de protection constituant ladite couche peuvent être :
- des particules de matériau de garde ou toutes autres particules servant généralement d'éléments de protection, par exemple commercialisées par la société Axens,
- un support de catalyseur ou un catalyseur (frais ou usé ou régénéré).
Tout matériau susceptible de retenir les particules colmatantes contenues dans la charge peut convenir au dispositif selon la présente invention, comme par exemple un matériau réticulé en céramique ou métallique, par exemple commercialisé par les sociétés Unicat ou Crystaphase. Ces matériaux réticulés peuvent se présenter sous forme de galette de section circulaire de 3 à 5 cm de diamètre et de hauteur comprise entre 1 à 3 cm.
Il est à noter que les éléments de filtration peuvent prendre différentes formes comme par exemple des billes, des cylindres multilobés, des cylindres simples, de tube creux ou encore en forme de roue de charrette ; cette liste n'étant pas exhaustive.
Dans la plupart des cas, une seule couche de média filtrant est suffisante. Néanmoins pour des hauteurs du milieu de filtration supérieures à 200 mm, on peut utiliser plusieurs couches et avec la taille des éléments de filtration d'une couche donnée qui est inférieure à celle des éléments de filtration constituant la couche immédiatement supérieure.
Cependant pour la mise en oeuvre du dispositif dans un réacteur on veillera à ce qu'en fin de chargement du média filtrant 15, l'extrémité supérieure des cheminées 7 de distribution soit située au-dessus de la couche supérieure de média filtrant de manière à ne pas gêner la passage de la phase gazeuse à l'intérieur de la cheminée du plateau distributeur.
Comme indiqué sur la figure 1, le dispositif comprend de préférence une grille de protection 19 perforée disposée au-dessus de la couche supérieure de média filtrant 15. Cette grille de protection permet de protéger le média filtrant de l'arrivée du flux gaz/liquide rentrant dans le réacteur afin d'éviter toute projection de particules constituant la couche supérieure de média filtrant et permet également un chargement / déchargement facilités par inclinaison par rapport à l'horizontale.

Selon un autre mode de réalisation du dispositif de filtration et de distribution, la hauteur h du moyen de support est sensiblement égale à la hauteur H des cheminées de manière à ne pas créer un espace de collecte E de la phase liquide entre le fond des paniers et le plateau et de sorte que le fond des paniers reposent sur le plateau plein 6. Dans ce mode de réalisation, les moyens de support 16 du panier sont perméables au liquide sur au moins la moitié inférieure de leur hauteur et de préférence sur la majeure partie de leur hauteur et les orifices latéraux 10 des cheminées sont répartis sur au moins la moitié inférieure de la hauteur de la cheminée et de préférence sur la majeure partie de la hauteur desdites cheminées 7. Etant donné que dans ce mode de réalisation le fond 13 des paniers repose sur le plateau plein 6, le fond 13 n'a pas besoin d'être perméable au liquide.

Le fonctionnement du dispositif de filtration et de distribution installé dans un réacteur à écoulement co-courant descendant d'une phase gazeuse et d'une phase liquide est décrit ci-dessous en référence à la figure 1. En général le plateau filtrant selon l'invention est au moins positionné en amont du premier lit catalytique 4 (dans le sens de l'écoulement des fluides). Lorsque la charge biphasique gaz/liquide est introduite de manière étagée sur différents lits catalytiques échelonnés le long du réacteur, il est possible de positionner un dispositif selon l'invention en amont de chacun des lits catalytiques.
Le mélange gaz/liquide est envoyé en tête du dispositif selon l'invention comme indiqué par la flèche G/L. La fraction gazeuse du mélange qui pénètre dans les cheminées 7 par les ouvertures supérieures après passage à travers les ouvertures supérieures 21 des moyens de support 16, est dirigée sous le plateau plein 6. Quant à la fraction liquide qui est empêchée de passer dans la partie supérieure des cheminées par les éléments déflecteurs 12 (voir figure 2), elle est collectée dans les paniers filtrants et percole à travers la ou les couches de média filtrant contenues dans les paniers. La mise en contact de la phase liquide avec les éléments de filtration permet de retenir les particules responsables de l'encrassement du lit catalytique de manière à fournir un liquide dit "épuré" qui diffuse à travers les orifices du fond des paniers.
Le liquide épuré est ainsi collecté dans l'espace de collecte E qui n'est occupé que par du liquide puisqu'en fonctionnement normal du réacteur, le niveau liquide au-dessus du plateau 6 se situe à l'intérieur de la couche de média 15 et au-dessous de l'extrémité supérieure des cheminées 7 qui ne sont accessibles qu'au gaz. Le liquide épuré accumulé dans l'espace de collecte E diffuse alors dans les cheminées par les ouvertures 10 débouchant dans cet espace et est mélangé avec la phase gazeuse qui circule dans les cheminées 7. Le mélange gaz/liquide épuré est évacué des cheminées 7 par leur ouverture inférieure 9 sous le plateau plein 6. Le jet de mélange gaz/liquide est ensuite dispersé lorsque qu'il rencontre le ou les éléments dispersifs 11 disposés entre le lit catalytique 4 et le plateau plein 6.
Dans un mode de réalisation particulier, les cheminées comportent également des orifices qui sont situés dans une zone correspondant à la hauteur du média filtrant et les moyens de support 16 (tube) sont poreux à la phase liquide de sorte que le liquide épuré soit apte à diffuser directement depuis la zone de filtration dans les cheminées en passant au travers des tubes.

Le mode de fonctionnement d'un dispositif de filtration et de distribution selon l'invention dans lequel le fond 13 des paniers, éventuellement plein, reposent sur le plateau 6 est semblable à celui décrit plus haut à la différence que le liquide épuré ne s'évacue pas des paniers par leur fond mais diffuse à travers les moyens de support 16 puis dans les cheminées 7 via les orifices latéraux 10 de ces dernières.

Les figures 4 à 6 qui sont des vues en coupe selon le plan horizontal passant par la droite (AA') de la figure 1 montrent différentes formes que peuvent prendre les paniers de filtration qui sont supportés par les cheminées 7 du plateau distributeur.
On observe que les paniers de filtration selon l'invention comportent au moins trois parois latérales verticales 14 qui délimitent la section du panier. Les paniers qui ont une paroi adjacente à la paroi du réacteur peuvent comporter sur certaine de leur paroi une courbure qui épouse celle de la paroi du réacteur. La section horizontale délimitée par les parois verticales peut être triangulaire (cas de trois parois verticales) comme représenté sur les figures 4 ou hexagonales (cas de six parois verticales) comme présenté sur la figure 5. Dans ces formes de réalisation préférées, tous les paniers sont traversés par au moins une cheminée avec laquelle le moyen de support du panier coopère.
Comme indiqué sur les figures 4 et 5, les paniers ont leurs angles qui sont limités par une cheminée du plateau distributeur. Ainsi dans le cas de la figure 4, le panier de forme triangulaire est traversé par une cheminée centrale, avec une cheminée à chaque angle. Sur la figure 5, le panier est de forme hexagonale et est traversé par une cheminée au centre, et six cheminées, une à chacun des angles de l'hexagone.
Alternativement et comme représenté à la figure 6, les paniers sont délimités par une paroi verticale de forme circulaire qui est un cas particulier d'une ellipse.
Dans les cas de figures où les paniers mises en oeuvre n'ont pas une paroi verticale en forme d'ellipse on distingue les paniers qui n'ont aucune de leur paroi en contact avec la paroi du réacteur et qu'on appelle paniers centraux, des paniers qui ont une partie de leurs parois attenante à la paroi du réacteur et qu'on désigne par paniers périphériques. Les paniers périphériques peuvent présenter au moins une paroi latérale courbe épousant la forme de la paroi 3 du réacteur tandis que les paniers centraux ont des parois verticales droites.

Un autre mode de réalisation alternatif non représenté fait intervenir des paniers dont les angles sont limités par une cheminée et dont le fond n'est pas traversé par une cheminée du plateau distributeur. Dans ce cas de figure, les moyens de support du panier sont portés par les parois latérales des paniers et peuvent prendre la forme d'ailettes recourbées formant crochet apte à s'accrocher à la cheminée.

De manière générale, l'ensemble des paniers s'ajuste de manière à couvrir toute la section du réacteur en laissant seulement un espace libre ou jeu fonctionnel entre les parois latérales des paniers adjacents de manière à permettre leur mouvement d'introduction ou de retrait individuellement, c'est à dire panier par panier.

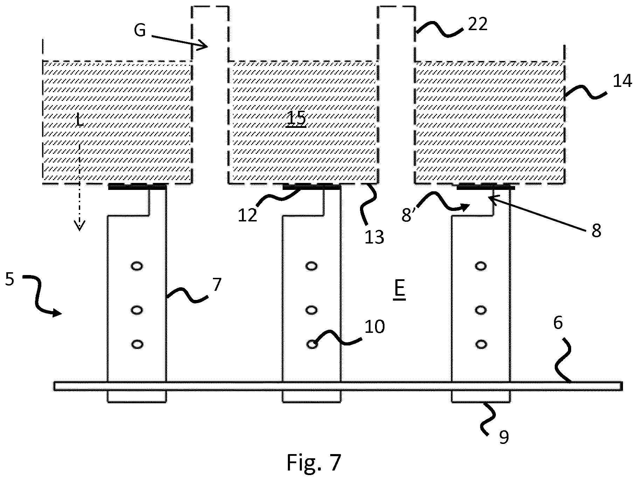

Un autre mode de réalisation d'un dispositif de filtration et distribution selon l'invention est représenté à la figure 7. Le dispositif de filtration et distribution 1 comprend un plateau distributeur 5 dont la conception est identique à celle de la figure 2 et une pluralité de paniers de filtration contenant au moins un média filtrant 15.
Le plateau distributeur 5 est équipé d'une pluralité de cheminées verticales 7 fermées à leur extrémité supérieure 8 et ouvertes à leur extrémité inférieure 9 et perforées d'orifices 10 latéraux (appelés aussi ici ouvertures) répartis sur la hauteur des cheminées 7. On notera que la paroi de la cheminée 7 située à l'extrémité supérieure 8 est échancrée de manière former une ouverture 8' autorisant le passage du gaz. La cheminée 7 comporte une plaque 12 qui permet de fermer l'extrémité supérieure 8.
Comme visible sur la figure 7, les paniers de filtration sont formés par un fond 13 qui est perméable au liquide et des parois verticales 14 qui sont de préférence également perméables au liquide et comprennent en outre au moins une cheminée 22 destinée au passage du gaz vers le plateau distributeur 5. Par exemple les paniers (fond, parois latérales et cheminée) peuvent être constitués par une grille ou par des feuilles métalliques présentant des perforations autorisant le passage du gaz et du liquide.
Le mode de réalisation de la figure 7 se distingue de celui de la figure 1 essentiellement par le fait que chaque panier de filtration est supporté par au moins une cheminée 7 du plateau distributeur par l'intermédiaire de son fond 13 qui constitue ainsi un moyen de support 16 qui coopère avec la cheminée du plateau distributeur. Plus précisément dans le cas de la figure 7, le fond 13 repose sur la plaque 12 de la cheminée 7.
Toujours dans ce mode de réalisation, la cheminée 22 du panier est décalée (Fig. 7) ou en alignement par rapport à une cheminée 7 du plateau distributeur. Lorsque le panier est disposé de sorte que sa cheminée 22 soit alignée avec une cheminée 7 du plateau distributeur, la plaque 12 de ladite cheminée comprend des ouvertures autorisant le passage du fluide gazeux entre les deux cheminées.
Par rapport au mode de réalisation montré à la figure 1, le montage/démontage du panier est plus aisé car une précision du positionnement des paniers par rapport au plateau distributeur n'est plus requise dans la mesure où le panier n'a plus à coulisser le long des cheminées 7. Ce mode de réalisation a également pour avantage par rapport au mode de réalisation montré à la figure 1 de permettre d'augmenter la hauteur du média filtrant indépendamment de la hauteur de la cheminée 7 du plateau distributeur. Selon une mode de réalisation préféré, le fond du panier 13 et la plaque 12 de la cheminée 7 comportent respectivement des éléments de positionnement complémentaires (du type male/femelle) apte à s'engager l'un avec l'autre assurant ainsi le maintien en place du panier par rapport au plateau distributeur.
Le fonctionnement d'un tel dispositif de filtration et distribution est pratiquement semblable à celui décrit en référence à la figure 1 mais se caractérise par le fait que la fraction gazeuse du mélange gaz/liquide diffuse vers l'espace de collecte E, délimité par le plateau plein 6 et le fond 13 du panier, de manière à former un ciel gazeux dans ledit espace E. Quant à la fraction liquide, celle-ci percole au travers le média filtrant 15 puis traverse le fond 13 du panier pour s'accumuler dans l'espace de collecte E sous le ciel gazeux. Le liquide épuré accumulé dans l'espace de collecte E diffuse ensuite dans les cheminées 7 par les ouvertures 10 débouchant dans cet espace et est mélangé avec la fraction gazeuse qui circule dans les cheminées 7 via l'ouverture 8'.

Le dispositif de filtration et de distribution selon la présente invention s'applique aux procédés d'hydrotraitement, d'hydrogénation sélective, de conversion des résidus, ou d'oxydation de coupes pétrolières Les charges lourdes susceptibles d'être traitées au moyen du présent plateau distributeur filtrant peuvent être définies comme celles dont le point d'ébullition est supérieur à 350°C, notamment de type distillat sous vide, résidu ou apparenté : gazole sous vide, résidus atmosphériques, résidus sous vides, huiles désasphaltées, ou encore résidus ou distillats sous vide issus des procédés de conversion tels que par exemple le coking, les hydrotraitements ou l'hydrocraquage en lit fixe, en lit bouillonnant ou en lit mobile. Tous ces types de résidus ou distillats sous vide peuvent être pris seuls ou en mélange.
Ces charges lourdes peuvent être utilisées telles quelles ou diluées par une fraction hydrocarbonée ou un mélange de fractions hydrocarbonées.
Les charges lourdes concernées par la présente invention peuvent aussi comprendre des coupes issues du procédé de liquéfaction du charbon, des extraits aromatiques, ou toutes autres coupes hydrocarbonées.

### Exemple

Un exemple illustratif de dimensionnement d'un dispositif de filtration et distribution selon l'invention en référence à la figure 5 pour un réacteur de 5,5 m de diamètre interne est décrit ci-dessous.

Les caractéristiques du plateau distributeur qui supporte 1149 cheminées verticales sont les suivantes:
- Diamètre du plateau plein : 5,5 m

Les dimensions des cheminées verticales sont :
- Hauteur des cheminées: 440 mm à partir du plateau plein
- Diamètre externe des cheminées: 50 mm
- Pas entre cheminées: 150 mm

Les cheminées comportent deux rangées d'orifices pour l'admission du liquide:
- Rangée 1 d'orifices: hauteur par rapport au plateau plein de 40 mm, 3 trous de 5 mm
- Rangée 2 d'orifices: hauteur par rapport au plateau plein de 130 mm, 3 trous de 5 mm
- Ouverture pour le passage du gaz en tête de cheminée pour l'admission du gaz est de 50 mm

Le dispositif comprend en outre 383 paniers de section hexagonale pouvant recevoir une cheminée à chaque angle de l'hexagone. Les dimensions du panier sont :
- Coté de l'hexagone : 95 mm
- Hauteur des parois de verticales : 240 mm

Le fond hexagonal de chaque panier est muni d'un orifice central surmonté d'un tube fermé à son extrémité supérieur et dans lequel est introduite une cheminée de distribution. Les dimensions du tube sont :
- Diamètre interne du tube : 55 mm
- Hauteur du tube : 300 mm

Les paniers sont ainsi supportés via le tube central qui repose sur la cheminée. Les fond des paniers sont situés à une distance de 140 mm au-dessus du plateau plein du plateau distributeur de manière à définir un espace de mélange pour la phase liquide épurée ayant une hauteur de de 140 mm.

Les paniers peuvent ainsi contenir un média filtrant, composé d'une ou deux couches, dont l'épaisseur est de 230 mm mesuré depuis le fond du panier.

## Revendications

1. Dispositif de filtration et de distribution (1) d'une phase gazeuse et d'une phase liquide, apte à être disposé en amont d'un lit catalytique fixe (4) d'un réacteur (2) fonctionnant à co-courant descendant de gaz et de liquide, comprenant:
• un plateau plein (6) s'étendant selon un plan horizontal sur lequel sont fixées des cheminées (7) sensiblement verticales ouvertes à leur extrémité supérieure et inférieure, lesdites cheminées (7) étant munies d'ouvertures (10) sur au moins une fraction de leur hauteur;
• une pluralité de paniers amovibles aptes à contenir et retenir au moins un média filtrant, chaque panier amovible étant défini par une paroi verticale (14) ellipsoïdale ou par au moins trois parois latérales verticales (14) et un fond (13), les parois verticales et/ou le fond étant perméables au gaz et au liquide et dans lequel chaque panier est pourvu d'au moins un moyen de support (16) du panier coopérant avec une cheminée du plateau pour soutenir le panier amovible.

2. Dispositif selon la revendication 1, dans lequel le fond (13) du panier est traversé par au moins une cheminée (7) et le moyen de support (16) coopère avec la cheminée (7) traversant le fond (13).

3. Dispositif selon les revendications 1 ou 2, dans lequel au moins une des parois latérales (14) comprend le moyen de support coopérant avec une cheminée (7).

4. Dispositif selon les revendications 1 ou 2, dans lequel le moyen de support (16) comprend un tube fixé sur le fond du panier dont le diamètre est sensiblement supérieur à celui de la cheminée, ledit tube étant fermé à une extrémité supérieure (17) et ouvert à une extrémité inférieure (20) de sorte que le tube soit apte à recevoir la cheminée (7).

5. Dispositif selon l'une des revendications 1 à 3, dans lequel le moyen de support (16) comprend une pluralité de bras verticaux fixés au fond du panier et lesdits bras sont équipés de moyens d'accrochage configurés pour coopérer avec une cheminée (7).

6. Dispositif selon la revendication 4, dans lequel le tube (16) est perméable à la phase liquide.

7. Dispositif selon l'une des revendications précédentes, dans lequel le fond (13) des paniers est perméable à la phase liquide et la hauteur h du moyen de support est inférieure à la hauteur H des cheminées de manière à créer un espace de collecte (E) de la phase liquide entre le fond des paniers et le plateau plein (6).

8. Dispositif selon l'une des revendications précédentes, dans lequel les paniers sont délimités par une cheminée du plateau située à chaque extrémité des côtés du panier.

9. Dispositif selon l'une des revendications précédentes, dans lequel des paniers situés en périphérie dudit dispositif ont au moins une paroi latérale (14) présentant une courbure.

10. Dispositif selon la revendication 1, dans lequel les paniers comportent au moins une cheminée (20) perméable au gaz et le fond du panier étant perméable à la phase liquide et dans lequel chaque panier est posé sur au moins une cheminée (7) du plateau plein (6) de sorte que le fond du panier (13) forme les moyens de support (16) du panier coopérant avec la cheminée (7) du plateau plein.

11. Dispositif selon l'une des revendications précédentes, dans lequel deux paniers adjacents sont séparés par un espace libre de manière à permettre leur mise en place et leur retrait panier par panier.

12. Réacteur (2) fonctionnant à co-courant descendant de gaz et de liquide comprenant dans le sens de l'écoulement des fluides :
• un lit catalytique fixe (4);
• un dispositif de filtration et de distribution (1) d'une phase gazeuse et d'une phase liquide selon l'une quelconque des revendications précédentes agencé en amont du lit catalytique (4);
• au moins une couche de média filtrant (15) disposée dans les paniers,
étant entendu que l'extrémité supérieure (17) d'une cheminée (7) est située au-dessus de la couche de média filtrant (15) lorsque ladite cheminée (7) traverse le fond (13) du panier.

13. Réacteur selon la revendication 12, dans lequel le dispositif est agencé dans le réacteur de sorte qu'une zone annulaire (18) est laissée libre entre les parois (14) des paniers périphériques attenantes à la paroi du réacteur.

14. Réacteur selon les revendications 12 ou 13, dans lequel les paniers contiennent plusieurs couches superposées de média filtrant.

15. Réacteur selon l'une des revendications 12 à 14, dans lequel le dispositif comprend une grille de protection perforée (19) disposée au-dessus de la couche supérieure de média filtrant.

16. Réacteur selon l'une des revendications 12 à 15, dans lequel les paniers amovibles ont une dimension inférieure à celle d'un trou d'homme pratiqué dans le réacteur.

## Patentansprüche

1. Vorrichtung zur Filterung und Verteilung (1) einer gasförmigen Phase und einer flüssigen Phase, die geeignet ist, stromaufwärts zu einem katalytischen Festbett (4) eines Reaktors (2), das im Abwärtsgleichstrom von Gas und Flüssigkeit funktioniert, umfassend:
• eine volle Platte (6), die sich entlang einer horizontalen Ebene erstreckt, auf der im Wesentlichen vertikale, an ihrem oberen und unteren Ende offene Abzüge (7) befestigt sind, wobei die Abzüge (7) mit Öffnungen (10) auf mindestens einem Teil ihrer Höhe versehen sind;
• eine Vielzahl von abnehmbaren Körben, die geeignet sind, mindestens ein Filtermedium zu enthalten und zurückzuhalten, wobei jeder abnehmbare Korb durch eine elliptische vertikale Wand (14) oder durch mindestens drei vertikale Seitenwände (14) und einen Boden (13) definiert ist, wobei die vertikalen Wände und/oder der Boden gas- und flüssigkeitsdurchlässig sind, und wobei jeder Korb mit mindestens einem Tragmittel (16) des Korbs versehen ist, das mit einem Abzug der Platte zusammenwirkt, um den abnehmbaren Korb zu unterstützen.

2. Vorrichtung nach Anspruch 1, bei der der Boden (13) des Korbs von mindestens einem Abzug (7) durchquert wird, und das Tragmittel (16) mit dem den Boden (13) durchquerenden Abzug (7) zusammenwirkt.

3. Vorrichtung nach den Ansprüchen 1 oder 2, bei der mindestens eine der Seitenwände (14) das Tragmittel umfasst, das mit einem Abzug (7) zusammenwirkt.

4. Vorrichtung nach den Ansprüchen 1 oder 2, bei der das Tragmittel (16) ein Rohr umfasst, das am Boden des Korbs befestigt ist, dessen Durchmesser wesentlich größer als jener des Abzugs ist, wobei das Rohr an einem oberen Ende (17) geschlossen und an einem unteren Ende (20) offen ist, so dass das Rohr geeignet ist, den Abzug (7) aufzunehmen.

5. Vorrichtung nach einem der Ansprüche 1 bis 3, bei der das Tragmittel (16) eine Vielzahl von vertikalen Armen umfasst, die am Boden des Korbs befestigt sind, und die Arme mit Befestigungsmitteln ausgestattet sind, die eingerichtet sind, um mit einem Abzug (7) zusammenzuwirken.

6. Vorrichtung nach Anspruch 4, bei der das Rohr (16) für die flüssige Phase durchlässig ist.

7. Vorrichtung nach einem der vorhergehenden Ansprüche, bei der der Boden (13) der Körbe für die flüssige Phase durchlässig ist, und die Höhe h des Tragmittels kleiner als die Höhe H der Abzüge ist, um einen Sammelraum (E) der flüssigen Phase zwischen dem Boden der Körbe und der vollen Platte (6) zu erzeugen.

8. Vorrichtung nach einem der vorhergehenden Ansprüche, bei der die Körbe von einem Abzug der Platte begrenzt sind, der sich an jedem Ende der Seiten des Korbs befindet.

9. Vorrichtung nach einem der vorhergehenden Ansprüche, bei der Körbe, die an der Peripherie der Vorrichtung angeordnet sind, mindestens eine Seitenwand (14) haben, die eine Krümmung aufweist.

10. Vorrichtung nach Anspruch 1, bei der die Körbe mindestens einen gasdurchlässigen Abzug (20) umfassen, wobei der Boden des Korbs für die flüssige Phase durchlässig ist, und bei der jeder Korb auf mindestens einem Abzug (7) der vollen Platte (6) steht, so dass der Boden des Korbs (13) die Tragmittel (16) des Korbs bildet, die mit dem Abzug (7) der vollen Platte zusammenwirken.

11. Vorrichtung nach einem der vorhergehenden Ansprüche, bei der zwei aneinandergrenzende Körbe durch einen Freiraum getrennt sind, um ihre Anordnung und ihre Entnahme Korb für Korb zu ermöglichen.

12. Reaktor (2), der mit Abwärtsgleichstrom von Gas und Flüssigkeit funktioniert, umfassend in Fließrichtung der Fluide:
• ein katalytisches Festbett (4);
• eine Vorrichtung zur Filterung und Verteilung (1) einer gasförmigen Phase und einer flüssigen Phase nach einem der vorhergehenden Ansprüche, die stromaufwärts zu dem katalytischen Bett (4) angeordnet ist;
• mindestens eine Schicht eines Filtermediums (15), die in den Körben angeordnet ist,
wobei es sich versteht, dass das obere Ende (17) eines Abzugs (7) über der Schicht des Filtermediums (15) angeordnet ist, wenn der Abzug (7) den Boden (13) des Korbs durchquert.

13. Reaktor nach Anspruch 12, bei dem die Vorrichtung in dem Reaktor derart angeordnet ist, dass eine ringförmige Zone (18) zwischen den Wänden (14) der an die Wand des Reaktors angrenzenden Umfangskörbe frei gelassen ist.

14. Reaktor nach den Ansprüchen 12 oder 13, bei dem die Körbe mehrere übereinanderliegende Schichten des Filtermediums enthalten.

15. Reaktor nach einem der Ansprüche 12 bis 14, bei dem die Vorrichtung ein perforiertes Schutzgitter (19) umfasst, das über der oberen Schicht des Filtermediums angeordnet ist.

16. Reaktor nach einem der Ansprüche 12 bis 15, bei dem die abnehmbaren Körbe eine kleinere Dimension als jene eines in dem Reaktor vorgesehenen Mannloches hat.

## Claims

1. A device (1) for filtration and distribution of a gaseous phase and a liquid phase, which can be disposed upstream of a fixed catalytic bed (4) of a reactor (2) operating with a descending co-current of gas and liquid, comprising:
• a solid plate (6) extending in a horizontal plane on which substantially vertical risers (7) which are open at their upper and lower ends are fixed, said risers (7) being provided with openings (10) over at least a fraction of their height;
• a plurality of removable baskets which are capable of containing and retaining at least one filtration medium, each removable basket being defined by an ellipsoidal vertical wall (14) or by at least three vertical lateral walls (14) and a bottom (13), the vertical walls and/or the bottom being permeable to gas and to liquid and in which each basket is provided with at least one basket support means (16) cooperating with a riser of the plate in order to support the removable basket.

2. The device according to claim 1, in which at least one riser (7) passes through the bottom (13) of the basket and the support means (16) cooperate with the riser passing through the bottom (13).

3. The device according to claim 1 or claim 2, in which at least one of the lateral walls (14) comprises the support means cooperating with a riser (7).

4. The device according to claim 1 or claim 2, in which the support means (16) comprise a tube fixed on the bottom of the basket the diameter of which is substantially greater than that of the riser, said tube being closed at an upper end (17) and open at a lower end (20) in a manner such that the tube is capable of receiving the riser (7).

5. The device according to one of claims 1 to 3, in which the support means (16) comprise a plurality of vertical arms fixed to the bottom of the basket and said arms are equipped with fastening means configured to cooperate with a riser (7).

6. The device according to claim 4, in which the tube (16) is permeable to the liquid phase.

7. The device according to one of the preceding claims, in which the bottom (13) of the baskets is permeable to the liquid phase and the height h of the support means is less than the height H of the risers in a manner such as to generate a space (E) for collecting liquid phase between the bottom of the baskets and the solid plate (6).

8. The device according to one of the preceding claims, in which the baskets are delimited by a riser of the plate located at each extremity of the sides of the basket.

9. The device according to one of the preceding claims, in which the baskets located at the periphery of said device have at least one lateral wall (14) which is curved.

10. The device according to claim 1, in which the baskets comprise at least one riser (20) which is permeable to gas and the bottom of the basket is permeable to the liquid phase and in which each basket is placed on at least one riser (7) of the solid plate (6) in a manner such that the bottom (13) of the basket forms the support means (16) for the basket cooperating with the riser (7) of the solid plate.

11. The device according to one of the preceding claims, in which two adjacent baskets are separated by a free space in a manner such as to allow them to be put into position and removed basket by basket.

12. A reactor (2) operating in descending gas and liquid co-current mode comprising, in the direction of flow of the fluids:
• a fixed catalytic bed (4);
• a device (1) for filtration and distribution of a gaseous phase and a liquid phase according to any one of the preceding claims disposed upstream of the catalytic bed (4);
• at least one layer of filtration means (15) disposed in the baskets;
with the proviso that the upper end (17) of a riser (7) is located above the layer of filtration medium (15) when said riser (7) passes through the bottom (13) of the basket.

13. The reactor according to claim 12, in which the device is disposed in the reactor in a manner such that an annular zone (18) is left open between the walls (14) of the peripheral baskets adjoining the wall of the reactor.

14. The reactor according to claim 12 or claim 13, in which the baskets contain a plurality of superimposed layers of filtration medium.

15. The reactor according to one of claims 12 to 14, in which the device comprises at least one perforated protective screen (19) disposed above the upper layer of filtration medium.

16. The reactor according to one of claims 12 to 15, in which the removable baskets have a dimension which is smaller than that of a man-hole formed in the reactor.
